# EUROPÄISCHE PATENTSCHRIFT

(11) **EP 2 867 065 B1**
(45) Veröffentlichungstag und Bekanntmachung des Hinweises auf die Patenterteilung: **26.04.2017**
(21) Anmeldenummer: 13725307.6
(22) Anmeldetag: 15.05.2013
(51) Int. Cl.: B60Q 9/00, G05B 13/02

(54) **VERFAHREN ZUR UNTERSTÜTZUNG EINES FAHRERS EINES FAHRZEUGS MIT EINEM FAHRASSISTENZSYSTEM**
METHOD FOR ASSISTING A DRIVER OF A VEHICLE HAVING A DRIVING ASSISTANCE SYSTEM
PROCÉDÉ POUR ASSISTER UN CONDUCTEUR D'UN VÉHICULE À L'AIDE D'UN SYSTÈME D'ASSISTANCE À LA CONDUITE

(30) Priorität: 29.06.2012 DE 102012211368
(43) Veröffentlichungstag der Anmeldung: 06.05.2015
(73) Patentinhaber: Robert Bosch GmbH, 70442 Stuttgart (DE)
(72) Erfinder: KOERBER, Ulrich, 70192 Stuttgart (DE)
(86) Internationale Anmeldenummer: PCT/EP2013/060104
(87) Internationale Veröffentlichungsnummer: WO 2014/000958

(56) Entgegenhaltungen:
- EP-A1- 1 470 977
- WO-A1-2008/071596
- DE-A1- 19 736 756
- US-A- 5 014 200
- US-A1- 2007 069 874
- US-A1- 2009 289 813
- US-A1- 2012 013 485

## Beschreibung

### Stand der Technik

Die Erfindung betrifft ein Verfahren zur Unterstützung eines Fahrers eines Fahrzeugs mit einem Fahrassistenzsystem bei dem ein Abstand zwischen dem Fahrzeug und einem Objekt in der Umgebung des Fahrzeugs ermittelt und dieser Abstand mit mindestens einer Warngrenze verglichen wird. Des Weiteren betrifft die Erfindung ein Computerprogramm, das das Verfahren zur Unterstützung des Fahrers ausführt, wenn es auf einem Computer abläuft und die Erfindung betrifft ein Fahrassistenzsystem zur Durchführung des Verfahrens.

Im Automobilbereich werden verschiedene Fahrassistenzsysteme eingesetzt, die den Fahrer beim Ausführen verschiedener Fahrmanöver unterstützen sollen. Dazu gehören beispielsweise Einparkassistenten, die mit Hilfe von Sensoren die Umgebung des Fahrzeugs erfassen und dabei insbesondere die Abstände zu Hindernissen ermitteln. Aus den erhaltenen Daten über die Umgebung des Fahrzeugs kann das Fahrassistenzsystem eine Einparktrajektorie ermitteln, über die das Fahrzeug in eine Parkposition überführt werden kann. Je nach Ausführungsform des Fahrassistenzsystems erhält der Fahrer Anweisungen, beispielsweise über den einzuschlagenden Lenkwinkel und die Fahrtrichtung, oder das Fahrassistenzsystem übernimmt diese Aufgaben über entsprechende Aktuatoren, wobei dem Fahrer eine Überwachungsfunktion zukommt.

Während des gesamten Einparkmanövers wird mit Hilfe der Abstandssensoren des Fahrzeugs die Umgebung weiter überwacht. Wird ein Objekt erkannt, dessen Abstand zum Fahrzeuge eine vorgegebene Warngrenze unterschreitet, kann eine Aktion eingeleitet werden. Diese Aktion kann beispielsweise in der Einleitung eines Bremsmanövers oder in der Ausgabe eines Warnsignals bestehen. Üblicherweise werden mehrere Warngrenzen vorgegeben, wobei beispielsweise bei Unterschreitung einer ersten Warngrenze eine Vorwarnung und bei Unterschreitung einer zweiten Warngrenze eine Vollwarnung ausgegeben wird. Dies ermöglicht es dem Fahrer die verbleibende Entfernung zwischen dem Fahrzeug und dem Objekt einzuschätzen.

Aus der DE 10 2004 039 179 A1 ist eine Einparkhilfe bekannt, deren Benutzerschnittstelle an individuelle Wünsche des momentanen Kraftfahrzeugnutzers angepasst werden kann. Der Kraftfahrzeugnutzer kann in Abhängigkeit von der eigenen Einschätzung seiner Einparkfähigkeiten verschiedene Modi wählen, um unterschiedlich stark bei der Einfahrt in die Parklücke unterstützt zu werden, oder um eine bestimmte Informationsausgabeart zu erhalten. Die Modi unterscheiden sich hinsichtlich eines Detailierungsgrades der an den Fahrer abgegebenen Informationen, hinsichtlich des Grades der Unterstützung des Fahrers oder hinsichtlich der Art der Darstellung oder der Anzeige von Informationen. Hierdurch wird verhindert, dass unerfahrene Benutzer hilflos vor dem System sitzen, während versierte Benutzer aufgrund vieler, für sie störender Hinweistöne schnell genervt reagieren. Auch das akustische Erscheinungsbild kann personalisiert und individuell angepasst werden.

Aus der DE 103 18 389 A1 ist eine elektronische Einpark- und Rangierhilfe für Kraftfahrzeuge bekannt, welche dynamisch an eine aktuelle Fahrsituation angepasst wird, so dass in unterschiedlichen Situationen die Genauigkeit des Einpark- oder Rangiervorgangs und die Sicherheit und der Komfort für den Fahrer erhöht werden. Dabei sind mehrere, an dem Kraftfahrzeug angebrachte Abstandssensoren zum Ermitteln eines jeweiligen Abstands zwischen dem Kraftfahrzeug und einem Hindernis vorgesehen. Die Grenzwerte, bei deren Unterschreitung ein Eingriff in den Fahrbetrieb des Kraftfahrzeugs erfolgt, sind an die Geschwindigkeit, die Fahrrichtung und/oder den Lenkwinkel des Kraftfahrzeugs anpassbar. Der Fahrer kontrolliert das Fahrassistenzsystem dadurch, dass er es ein- und ausschalten, übersteuern und/oder Richtungswechsel anzeigen kann.

Aus US 2009/289813 A1 ist ein Fahrassistenzsystem bekannt, welches einem Fahrer das Einparken in eine Garage erleichtern soll. Dazu umfasst das Fahrassistenzsystem Ultraschallsensoren, mit denen insbesondere der Abstand zwischen der Front des Fahrzeug und einer Wand der Garage ermittelt werden kann. Bei der Annäherung des Fahrzeugs an die Wand der Garage werden hörbare Töne abgegeben, deren Wiederholrate sich beschleunigt während das Fahrzeug sich der Wand annähert. Erreicht der Abstand zwischen der vorderen Stoßstange und der Wand einen vorgegebenen Abstand, so wird ein Dauerton ausgegeben. Das durch beschriebene Assistenzsystem umfasst des Weiteren ein GPS-System sowie einen Lernmodus, mit dem der Fahrer in Abhängigkeit des Orts, an dem sich das Fahrzeug befindet, die Warnabstände des Assistenzsystems einstellen kann. Dabei erfolgt eine Verknüpfung der Warnabstände mit der Position des Fahrzeugs, wobei das Assistenzsystem mit den gelernten Warnabständen aktiviert wird, wenn das Fahrzeug die gespeicherte Position erreicht. Außerdem kann eine Referenzposition als Warnabstand durch Benutzereingabe gespeichert werden. Nachteilig an den aus dem Stand der Technik bekannten Fahrassistenzsystemen ist, dass die Warngrenzen, bei deren Unterschreitung eine Aktion eingeleitet wird, nicht individuell an den Fahrer oder an bestimmte wiederkehrende Situationen anpassbar sind. So werden beispielsweise durch ältere Nutzer oder Fahranfänger große Warngrenzen gewünscht, so dass beispielsweise beim Einparken eine Warnung vor einem Hindernis frühzeitig erfolgt, wohingegen erfahrene Fahrer durch zu häufige und zu früh erfolgende Aktionen durch das Fahrassistenzsystem genervt werden, ohne dass diese Warnungen zur Fahrsicherheit beitragen.

Auch bei wiederkehrenden Fahrsituationen, wie Beispiel das Einparken in die eigene Garage, sind fest vorgegebene Warngrenzen unvorteilhaft. Die Garagen sind häufig so eng, dass durch die Fahrassistenzsysteme unerwünschte Warnungen erfolgen. Diese überflüssigen Warnungen führen nicht zu einem Sicherheitsgewinn, sondern reduzieren die Akzeptanz der Fahrassistenzsysteme bei den Nutzern.

### Offenbarung der Erfindung

Erfindungsgemäß wird ein Verfahren zur Unterstützung eines Fahrers eines Fahrzeugs mit einem Fahrassistenzsystem vorgeschlagen, folgende Schritte umfassend:
(a) Ermitteln eines Abstands zwischen dem Fahrzeug und einem Objekt in der Umgebung des Fahrzeugs,
(b) Vergleichen des Abstands mit mindestens einer Warngrenze,
(c) Einleiten einer Aktion bei Unterschreitung der mindestens einen Warngrenze,
wobei die mindestens eine Warngrenze in Abhängigkeit von Vorgaben des jeweiligen Fahrers und/oder vom Ort, an dem sich das Fahrzeug befindet, eingestellt wird.

Im ersten Schritt (a) des Verfahrens werden mit Hilfe von am Fahrzeug angeordneter Sensoren Objekte in der Umgebung des Fahrzeugs erkannt und deren Abstände zum Fahrzeug ermittelt. Die Sensoren können beispielsweise als Ultraschallsensoren, Radarsensoren, Lidar-Sensoren und/oder optische Kameras ausgeführt sein. Objekte können andere Fahrzeuge, Personen, Hindernisse und dergleichen sein.

Im zweiten Schritt (b) des Verfahrens werden die ermittelten Abstände der Objekte in der Umgebung des Fahrzeugs mit mindestens einer Warngrenze verglichen. Die Warngrenzen sind anpassbar in einem Speicher hinterlegt und können in Abhängigkeit von den Vorgaben des jeweiligen Fahrers und/oder von dem Ort, an dem sich das Fahrzeug befindet, eingestellt werden. Unter einer Vorgabe des jeweiligen Fahrers wird eine Eingabe verstanden, bei der veränderte Warngrenzen eingegeben werden, zwischen verschiedenen hinterlegten Warngrenzen gewählt wird oder das Fahrassistenzsystem in einen Zustand versetzt wird, bei dem es neue Warngrenzen in Abhängigkeit von Sensordaten, die von den am Fahrzeug angeordneten Sensoren geliefert werden, berechnet. Diese Vorgaben können vom Fahrer des Fahrzeugs gespeichert werden.

Unter der Abhängigkeit vom Ort ist zu verstehen, dass den verwendeten Warngrenzen ein Ort zugeordnet wird, und die ermittelten Abstände mit den Warngrenzen verglichen werden, deren zugeordneter Ort innerhalb eines vorgegebenen Radius um den Ort liegt, an dem sich das Fahrzeug befindet. Dieser vorgegebene Radius liegt vorzugsweise zwischen 1 m und 15 m.

In einer Ausführungsform des Verfahrens wählt der Fahrer über eine Eingabevorrichtung zwischen mehreren verschiedenen vorgegebenen Warngrenzen aus, so dass die Warngrenzen nicht direkt eingegeben werden müssen. Beispielsweise kann im Fahrzeug ein Taster angeordnet werden, mit dem der Fahrer zwischen weiten Warngrenzen und engen Warngrenzen wählen kann. Dadurch lässt sich die mindestens eine Warngrenze gegenüber einer voreingestellten Warngrenze verkürzen.

Erfindungsgemäß ist die mindestens eine Warngrenze von Begrenzungen eines zu durchfahrenden Korridors abhängig. Dieser zu durchfahrende Korridor kann beispielsweise durch den Fahrer, durch eine Einparkhilfe und/oder durch einen zuvor abgefahrenen und gespeicherten Weg vorgegeben werden. Besonders bevorzugt ist es, wenn dem zu durchfahrenden Korridor ein Ort zugeordnet wird. Die Begrenzungen können durch Objekte, die entlang des Korridors liegen, vorgegeben sein.

In dieser Ausführungsform kann das Verfahren durch den jeweiligen Fahrer auf wiederkehrende Fahrsituationen angepasst werden, wobei die mindestens eine Warngrenze so festgelegt wird, dass die Objekte, die entlang des bekannten zu durchfahrenden Korridors liegen, keine Aktion des Fahrassistenzsystems ausgelöst wird. Dadurch können beispielsweise Warnungen, wie sie beim Durchfahren einer Engstelle oder der Einfahrt in eine Garage immer wieder auftreten, vermieden werden.

Erfindungsgemäß wird bei der Einstellung der mindestens einen Warngrenze die Fahrsituation berücksichtigt. Dies kann beispielsweise über Abstandssensoren des Fahrzeugs, eine Bilderkennung durch am Fahrzeug montierte Kameras, Abgleichen einer Fahrzeugposition mit einer Datenbank, Auswerten einer Fahrzeuggeschwindigkeit, Auswahl durch den Fahrer oder über eine Kombination aus mindestens zwei dieser Mittel ermittelt werden. Beispielsweise kann bei Auswertung der Fahrzeuggeschwindigkeit die mindestens eine Warngrenze mit der Geschwindigkeit skaliert werden, so dass zum Beispiel bei niedrigen Geschwindigkeiten, wie beispielsweise Schrittgeschwindigkeit eine kurze Warngrenze, bei mittleren Geschwindigkeiten, beispielsweise zwischen 10 und 30 km/h eine weite Warngrenze verwendet wird und bei hohen Geschwindigkeiten, beispielsweise über 30 km/h das Fahrassistenzsystem abgeschaltet wird.

In einer Ausführungsform des Verfahrens wird der Ort, an dem sich das Fahrzeug befindet, mit Hilfe von Navigationssatelliten, wie beispielsweise GPS oder Galileo, eines im Fahrzeug vorhandenen Navigationsgeräts, Bilderkennung durch am Fahrzeug montierte Kameras, Erkennen eines Positionssenders, durch Auswahl durch den Fahrer oder über eine Kombination aus mindestens zwei dieser Mittel bestimmt. Dabei kann beispielsweise ein Positionssender an einer Garageneinfahrt angebracht werden, um diese für das Fahrassistenzsystem zu kennzeichnen.

In einer besonders bevorzugten Ausführungsform werden den zu durchfahrenden Korridoren, die zum Festlegen der mindestens einen Warngrenze verwendet werden, Orte zugeordnet. Auf diese Weise kann der zu durchfahrende Korridor automatisch in Abhängigkeit von dem Ort, an dem sich das Fahrzeug befindet, abgerufen werden. Auf diese Weise können typische Fahrsituationen aufgezeichnet werden, so dass in diesen Fahrsituationen, die dem Fahrer wohl bekannt sind, eine Aktion erst bei Unterschreitung einer deutlich kürzeren Warngrenze erfolgt.

Erfindungsgemäß wird die mindestens eine Warngrenze individuell für jeden Fahrer des Fahrzeugs eingestellt. In einer Ausführungsform des Verfahrens erfolgt das Ermitteln des Fahrers durch Erkennen eines individualisierten elektronischen Schlüssels, durch Auswertung von Körpermaßen und/oder durch eine Abfrage an den Fahrer.

Zur Erkennung des Fahrers über einen individualisierten Schlüssel wird jedem Schlüssel ein elektronisch auslesbarer, eindeutiger Code zugeordnet. Zur Erkennung des Fahrers über seine Körpermaße sind beispielsweise in den Sitzen Sensoren angeordnet, die das Gewicht und/oder die Größe des Fahrers erkennen.

Im letzten Schritt (c) des Verfahrens wird, sofern durch den Abstand zu einem Objekt in der Umgebung des Fahrzeugs eine Warngrenze unterschritten wird, eine Aktion eingeleitet. Eine Aktion ist beispielsweise das Ausgeben eines Warntons, die Ausgabe einer optischen Anzeige, ein Lenkeingriff oder ein Bremseingriff.

Erfindungsgemäß wird weiterhin ein Computerprogramm vorgeschlagen, welches eines der soeben beschriebenen Verfahren durchführt, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder Alternativ kann das Computerprogramm auf einer Computereinrichtung wie etwa auf einem Server zum Herunterladen bereitgestellt werden, zum Beispiel über ein Datennetzwerk wie das Internet oder eine Kommunikationsverbindung wie etwa eine Telefonleitung oder eine drahtlose Verbindung.

Erfindungsgemäß wird des Weiteren ein Fahrassistenzsystem zur Unterstützung eines Fahrers eines Fahrzeugs vorgeschlagen, umfassend Mittel zur Bestimmung eines Abstands zu einem Objekt in der Umgebung des Fahrzeugs, einen Speicher, in dem mindestens eine Warngrenze abgelegt ist, und ein Steuergerät, welches eingerichtet ist, den Abstand des Fahrzeugs zu einem Objekt mit der mindestens einen Warngrenze zu vergleichen und bei Unterschreitung eine Aktion einzuleiten, wobei die im Speicher abgelegte mindestens eine Warngrenze in Abhängigkeit von Vorgaben des jeweiligen Fahrers und/oder vom Ort einstellbar ist.

Die Mittel zur Bestimmung eines Abstands zu einem Objekt in der Umgebung des Fahrzeugs können beispielsweise als Ultraschallsensoren, Radarsensoren, Lidar-Sensoren und/oder optische Kameras ausgeführt sein.

Um beim Unterschreiten einer Warngrenze eine Aktion einzuleiten, ist das Fahrassistenzsystem beispielsweise mit einer optischen Anzeige, einem Lautsprecher und/oder Mitteln für einen Fahreingriff versehen. Dabei kann beispielsweise über den Lautsprecher je nach Entfernung des Objekts vom Fahrzeug ein unterschiedlicher Warnton ausgegeben werden.

In einer bevorzugten Ausführungsform umfasst das Fahrassistenzsystem eine Eingabevorrichtung, die zur Anpassung der mindestens einen Warngrenze, Auswahl des Fahrers und/oder Auswahl eines Ortes eingerichtet ist. Diese Eingabevorrichtung kann beispielsweise in Form von Tastern, Schaltern oder als Touchscreen ausgeführt sein. In einer Ausführungsform wird die Eingabevorrichtung gemeinsam mit anderen Fahrassistenzsystemen, beispielsweise einem Navigationssystem, genutzt.

In einer weiteren Ausführungsform der Erfindung umfasst das Fahrassistenzsystem Mittel zur Ortsbestimmung, die zur ortsabhängigen Einstellung der mindestens einen Warngrenze eingerichtet sind. Diese Mittel zur Ortsbestimmung sind beispielsweise als Empfänger für Navigationssatelliten wie beispielsweise GPS oder Galileo, als Navigationsgerät, über eine Bilderkennung durch am Fahrzeug montierte Kameras oder durch das Erkennen eines Positionssenders ausgeführt.

In einer Ausführungsform wird als Empfänger für einen Positionssender ein Ultraschallsensor verwendet, der auch als Abstandssensor eingesetzt wird. Dabei wird als Positionssender ein Ultraschallsender eingesetzt, der zum Beispiel an einer Garageneinfahrt angebracht wird.

Die Mittel zur Ortsbestimmung stehen mit dem Steuergerät in Verbindung, so dass dieses in Abhängigkeit des Ortes Warngrenzen aus einem Speicher abrufen kann.

Erfindungsgemäß umfasst das Fahrassistenzsystem des Weiteren Mittel zur Erkennung des Fahrers. Diese können beispielsweise als individualisierter elektronischer Schlüssel oder in Form von Sensoren im Fahrersitz ausgeführt sein. Im letzteren Fall kann der jeweilige Fahrer über sein Gewicht und/oder seine Größe identifiziert werden.

Erfindungsgemäß umfasst das Fahrassistenzsystem Sensoren zur Erfassung einer Fahrsituation, die zur fahrsituationsabhängigen Einstellung der mindestens einen Warngrenze eingerichtet sind. Diese Sensoren können beispielsweise als Abstandssensoren des Fahrzeugs, in Form einer Bilderkennung durch am Fahrzeug montierte Kameras und/oder als Sensoren zur Erkennung der Fahrzeuggeschwindigkeit ausgeführt sein. Dadurch kann die mindestens eine Warngrenze beispielsweise mit der Fahrzeuggeschwindigkeit skaliert werden, so dass zum Beispiel bei niedrigen Geschwindigkeiten, wie beispielsweise Schrittgeschwindigkeit, eine kurze Warngrenze, bei mittleren Geschwindigkeiten, beispielsweise zwischen 10 und 30 km/h eine weite Warngrenze verwendet wird und bei hohen Geschwindigkeiten, beispielsweise über 30 km/h das Fahrassistenzsystem abgeschaltet wird.

Eine Aktion, die durch das Fahrassistenzsystem als Reaktion auf eine Unterschreitung einer Warngrenze eingeleitet wird, ist beispielsweise das Ausgeben eines Warntons, Ausgabe einer optischen Anzeige, ein Lenkeingriff und/oder ein Bremseingriff.

### Vorteile der Erfindung

Durch den Einsatz des erfindungsgemäßen Verfahrens zur Unterstützung eines Fahrers eines Fahrzeugs mit einem Fahrassistenzsystem kann dessen Verhalten an die Bedürfnisse des Fahrers angepasst werden. Fahranfänger oder ältere Nutzer können mit dem erfindungsgemäßen Verfahren das Assistenzsystem so einstellen, dass eine Aktion des Fahrassistenzsystems, wie beispielsweise die Ausgabe einer Warnung, früher erfolgt, so dass genügend Zeit für eine Reaktion des Fahrers verbleibt.

Erfahrene Nutzer des Fahrassistenzsystems können mit dem erfindungsgemäßen Verfahren die Warngrenzen, bei deren Unterschreitung eine Aktion eingeleitet wird, verringern, so dass beispielsweise eine Warnung bei Unterschreitung eines Abstands weniger häufig ausgegeben wird. Vorteilhafterweise kann mit dem erfindungsgemäßen Verfahren das Verhalten eines Fahrassistenzsystems individuell auf den jeweiligen Fahrer eingestellt werden, so dass jeder Nutzer des Fahrzeugs optimal unterstützt werden kann.

Ebenfalls vorteilhaft wirkt sich die Möglichkeit aus, das Fahrassistenzsystem abhängig vom Ort, an dem sich das Fahrzeug befindet, zu beeinflussen. So kann beispielsweise vorgegeben werden, dass beim Durchqueren einer bekannten Engstelle oder dem Einparken in eine enge Garage kein Warnton ausgegeben wird.

In einer weiteren vorteilhaften Ausführungsform ist vorgesehen, dass der Fahrer automatisch erkannt wird. Auf diese Weise findet jeder Nutzer des Fahrzeugs, ohne weitere Eingaben vornehmen zu müssen, ein auf ihn personalisiertes Fahrassistenzsystem vor.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figuren 1a und 1b: ein Fahrzeug, welches in einer durch mehrere Objekte begrenzten Parklücke steht,
- Figur 2: ein Fahrzeug, welches eine Engstelle passiert,
- Figuren 3a und 3b: ein Fahrzeug, welches in eine Garage einfährt.
Ausführungsformen der Erfindung

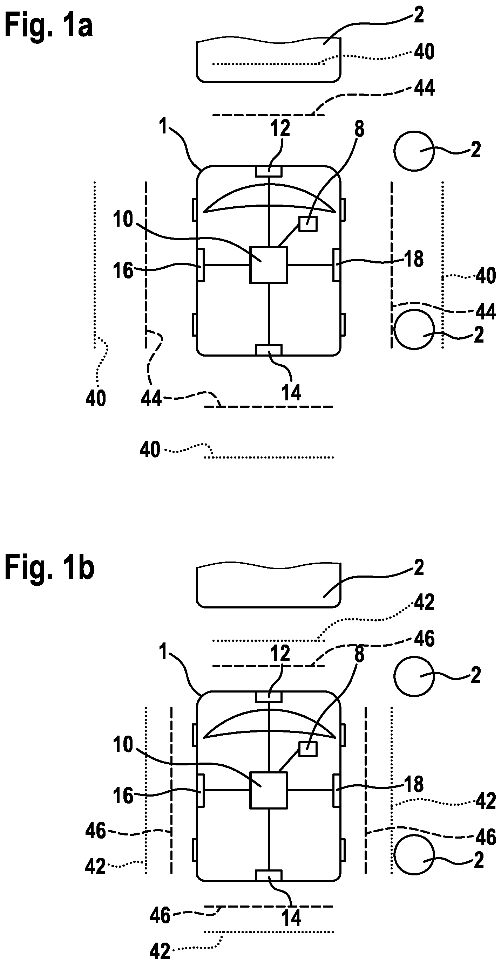

In Figur 1a ist ein Fahrzeug dargestellt, welches in einer von verschiedenen Objekten begrenzten Parklücke steht.

Figur 1 a zeigt ein geparktes Fahrzeug 1. Der Parkplatz wird durch mehrere Objekte 2, die in der Umgebung des Fahrzeugs 1 angeordnet sind, begrenzt. An dem Fahrzeug 1 sind mehrere Abstandssensoren 12, 14, 16, 18 angeordnet, die bevorzugt als Ultraschallsensoren ausgeführt sind. Die Ultraschallsensoren 12, 14, 16 und 18 sind mit einem Steuergerät 10 verbunden. Das Steuergerät 10 steht mit einer Signalisierungsvorrichtung 8 in Verbindung, die dem Fahrer auf optischem oder akustischem Weg Signale vermitteln kann. Bevorzugt umfasst die Signalisierungsvorrichtung 8 einen Lautsprecher, mit dem sich verschiedene Warntöne ausgeben lassen.

Jedem Ultraschallsensor 12, 14, 16 und 18 ist eine Vorwarngrenze 40 und eine Vollwarngrenze 44 zugeordnet. In den Figuren sind die Vorwarngrenzen 40 mit gepunkteten Linien und die Vollwarngrenzen 44 mit gestrichelten Linien eingezeichnet. Die Vorwarngrenze 40 ist beispielsweise zwischen 1 m und 2 m gewählt und die Vollwarngrenze beispielsweise in einem Bereich von 20 cm bis 100 cm. Dabei ist es möglich, für jeden Sensor 12, 14, 16 und 18 eigene Vor- und Vollwarngrenzen zu wählen. In der in Figur 1a dargestellten Situation wurden vom Fahrer des Fahrzeugs 1 weite Grenzen gewählt, so dass die Vorwarngrenze bei etwa 2 m liegt und die Vollwarngrenze bei etwa 1 m. Bei sämtlichen Objekten 2 in der Umgebung des Fahrzeugs 1 beträgt der Abstand zum Fahrzeug 1 weniger als die eingestellte Vorwarngrenze 40, so dass durch das Steuergerät 10 sowohl beim vorderen Ultraschallsensor 12 als auch beim rechten Ultraschallsensor 18 eine Unterschreitung der Vorwarngrenze 40 registriert wird.

Als Reaktion auf die Unterschreitung der Vorwarngrenze 40 wird durch das Steuergerät 10 über die Signalisierungsvorrichtung 8 ein akustisches Signal ausgegeben.

Figur 1b zeigt ein geparktes Fahrzeug, wobei der Parkplatz von mehreren Objekten 2 begrenzt wird, und wobei die Warngrenzen reduziert sind.

Die in Figur 1b dargestellte Situation entspricht im Wesentlichen der in Figur 1 a gezeigten. Der Parkplatz, auf dem ein Fahrzeug 1 steht, ist von mehreren Objekten 2 umgeben. Das Fahrzeug 1 ist mit mehreren Abstandssensoren 12, 14, 16 und 18 ausgerüstet, die als Ultraschallabstandssensoren ausgeführt sind. Dabei befindet sich jeweils ein Sensor 12 vorne, ein Sensor 14 hinten, ein Sensor 16 auf der linken Seite und ein Sensor 18 auf der rechten Seite. Die Ultraschallsensoren 12, 14, 16, 18 sind mit einem Steuergerät 10 verbunden, welches wiederum mit einer Signalisierungsvorrichtung 8 in Verbindung steht. Jedem Ultraschallsensor 12, 14, 16 und 18 wurden jedoch abweichend von Figur 1a durch den Fahrer eine reduzierte Vorwarngrenze 42 und eine reduzierte Vollwarngrenze 46 zugeordnet. Diese Zuordnung erfolgt beispielsweise über eine mit dem Steuergerät 10 gekoppelte Eingabevorrichtung. Wie der Figur 1b entnommen werden kann, befinden sich nun sämtliche Objekte 2, die die Parklücke begrenzen, außerhalb dieser reduzierten Warngrenzen 42, 46. Somit wird durch das Steuergerät 10 keine Unterschreitung einer Warngrenze festgestellt, wodurch eine Warnmeldung an den Fahrer mittels der Signalisierungsvorrichtung 8 unterbleiben kann.

Durch den Einsatz des erfindungsgemäßen Verfahrens kann ein Fahranfänger oder ein älterer Nutzer die Warngrenzen wie in Figur 1a dargestellt einstellen und erhält auf diese Weise frühzeitig Hinweise auf Objekte 2 in der Umgebung des Fahrzeugs 1. Ein erfahrener Nutzer, der im Einparken geübt ist, kann mit Hilfe des erfindungsgemäßen Verfahrens die Warngrenzen gemäß der Darstellung in Figur 1b wählen, so dass eine Warnung vor einem Objekt im Umkreis des Fahrzeugs später erfolgt oder wie in Figur 1b dargestellt, ganz unterbleiben kann.

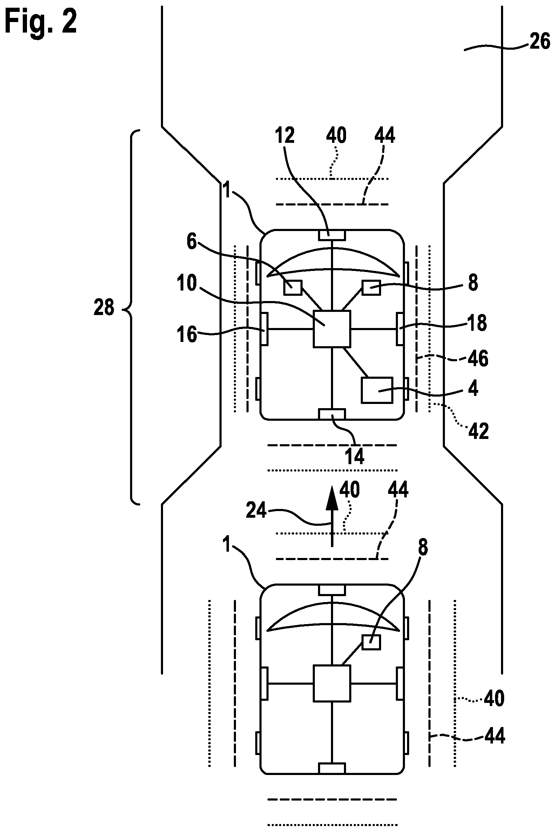

Figur 2 zeigt ein Fahrzeug beim Durchqueren einer Engstelle.

In Figur 2 ist ein Fahrzeug 1 dargestellt, welches eine Engstelle 28 durchfährt. Das Fahrzeug 1 ist mit Abstandssensoren 12, 14, 16 und 18 ausgestattet, die mit einem Steuergerät 10 verbunden sind. Die Abstandssensoren 12, 14, 16, 18 sind beispielsweise als Ultraschallsensoren ausgeführt. Jedem Abstandssensor 12, 14, 16 und 18 ist jeweils eine Vorwarngrenze 40 und eine Vollwarngrenze 44 zugeordnet. In der in Figur 2 dargestellten Situation sind diese Warngrenzen vor dem Durchqueren der Engstelle 28 für jeden Abstandssensor 12, 14, 16, 18 gleich gewählt. Die Vorwarngrenze 40 liegt beispielsweise zwischen 1 m und 2 m und die Vollwarngrenze 44 beispielsweise zwischen 20 cm und 100 cm. Würde das Fahrzeug 1 mit diesen Warngrenzen in Richtung 24 fahren, würde bei Erreichen der Engstelle 28 über das Steuergerät 10 eine Unterschreitung der Vorwarngrenze und Vollwarngrenze von sowohl dem linken Sensor 16 als auch dem rechten Sensor 18 festgestellt werden. Dies würde dem Fahrer des Fahrzeugs 1 über einen Warnton mit Hilfe der Signalisierungsvorrichtung 8 mitgeteilt werden.

Da dem Fahrer des Fahrzeugs 1 nach mehrmaligem Passieren der Engstelle 28 deren Existenz bewusst ist, und eine Warnmeldung bei jeder Durchquerung dieser Engstelle 28 erfolgen würde, ist in dieser Situation die Ausgabe einer Warnmeldung unerwünscht.

Um die Warngrenzen 40, 44 abhängig vom Ort so anzupassen, dass die Warngrenzen 40, 44 beim Erreichen der Engstelle 28 für die seitlichen Sensoren 16, 18 reduziert werden, wird das Fahrassistenzsystem vor dem Erreichen der Engstelle 28 durch den Fahrer in einen Lernmodus versetzt. Dies kann beispielsweise durch Betätigen eines Schalters, durch Auswahl in einem Menusystem oder über ein anderes Eingabemittel erfolgen. Beim anschließenden Durchqueren der Engstelle 28 werden vom Steuergerät 10 die ermittelten Abstände der Abstandssensoren 12, 14, 16 und 18 ausgewertet, und anschließend werden reduzierte Warngrenzen 42, 46 festgelegt. Diese reduzierten Warngrenzen 42, 46 werden so festgelegt, dass bei einem nachfolgenden Durchqueren der Engstelle 28 keine Warnung ausgelöst wird. Zusätzlich wird über einen GPS-Empfänger 6, der mit dem Steuergerät 10 in Verbindung steht, der Ort, an dem sich die Engstelle 28 befindet, ermittelt.

Bei nachfolgenden Durchquerungen der Engstelle 28 werden diese reduzierten Warngrenzen 42, 46 durch das Steuergerät 10 automatisch eingestellt, sobald das Fahrzeug 1 in die Nähe der Engstelle 28 kommt, das heißt, wenn sich das Fahrzeug in einem Radius von beispielsweise 15 m um die Engstelle 28 befindet.

Die positionsabhängigen Warngrenzen können in weiteren Ausführungsformen des Verfahrens über eine geeignete Eingabevorrichtung durch den Fahrer direkt eingegeben werden, oder von einem Einparkassistenten so vorgegeben werden, dass keine Warnmeldung bei bekannten Hindernissen erfolgt, solange sich das Fahrzeug im vorberechneten Fahrkorridor befindet.

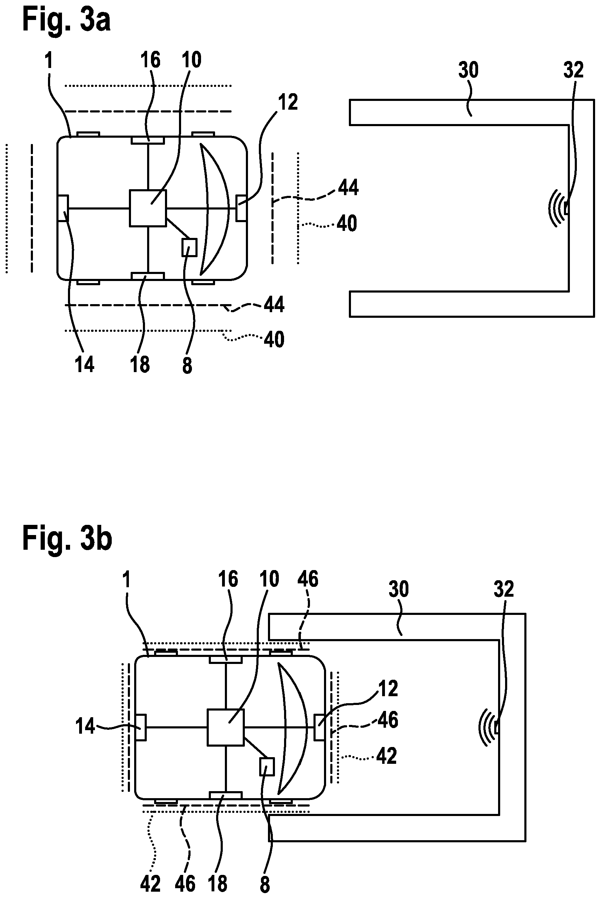

Figuren 3a und 3b zeigen ein Fahrzeug beim Einparken in eine enge Garage.

In Figur 3a steht ein Fahrzeug 1, welches mit Abstandssensoren 12, 14, 16 und 18 ausgestattet ist, vor einer Garage 30. Die Abstandssensoren 12, 14, 16 und 18 stehen mit einem Steuergerät 10 in Verbindung, welches die ermittelten Abstände mit den jeweiligen Sensoren zugeordneten Vorwarngrenzen 40 und Vollwarngrenzen 44 vergleicht. Bei Unterschreitung einer Warngrenze 40, 44 wird über eine Signalisierungsvorrichtung 8 ein Warnsignal ausgegeben.

In der in Figur 3a dargestellten Situation sind die Warngrenzen 40, 44 so groß gewählt, dass beim Einfahren in die Garage 30 in jedem Fall eine Warnung erfolgen würde.

In Figur 3b beginnt das Fahrzeug 1 aus Figur 3a in die Garage 30 einzufahren. In der Garage 30 ist ein Positionssender 32 angeordnet, der als Ultraschallsender ausgeführt ist. Die von dem Positionssender 32 ausgesendeten Signale sind so eingerichtet, dass diese von Abstandssensoren auf Ultraschallbasis empfangen werden können. Der Empfang des Positionssenders 32 wird über das Steuergerät 10 registriert, worauf dieses für den vorderen Abstandssensor 12 sowie für die beiden seitlichen Sensoren 16 und 18 verkürzte Vor- und Vollwarngrenzen 42, 46 vorgibt. Auf diese Weise kann der Fahrer des Fahrzeugs 1 in die Garage 30 einfahren, ohne unnötige Warnmeldungen zu erhalten.

## Patentansprüche

1. Verfahren zur Unterstützung eines Fahrers eines Fahrzeugs mit einem Fahrassistenzsystem umfassend die folgenden Schritte:
(a) Ermitteln eines Abstands zwischen dem Fahrzeug und einem Objekt in der Umgebung des Fahrzeugs,
(b) Vergleichen des Abstands mit mindestens einer Warngrenze,
(c) Einleiten einer Aktion bei Unterschreitung der mindestens einen Warngrenze,
wobei die mindestens eine Warngrenze in Abhängigkeit von Vorgaben des jeweiligen Fahrers und/oder vom Ort, an dem sich das Fahrzeug befindet, eingestellt wird, und wobei bei der Einstellung der mindestens einen Warngrenze eine Fahrsituation berücksichtigt wird, welche durch Abstandssensoren des Fahrzeugs, eine Bilderkennung durch am Fahrzeug montierte Kameras, Abgleichen einer Fahrzeugposition mit einer Datenbank, Auswerten einer Fahrzeuggeschwindigkeit, Auswahl durch den Fahrer oder über eine Kombination mindestens zwei dieser Mittel ermittelt wird, **dadurch gekennzeichnet, dass** die mindestens eine Warngrenze individuell für jeden Fahrer des Fahrzeugs eingestellt wird, wobei das Ermitteln des Fahrers durch Erkennen eines individualisierten Schlüssels, Auswertung von Körpermaßen und/oder durch eine Abfrage an den Fahrer erfolgt und dass die mindestens eine Warngrenze von Begrenzungen eines zu durchfahrenden Korridors abhängig ist.

2. Verfahren nach Anspruch 1, **dadurch gekennzeichnet, dass** auf Vorgabe durch den jeweiligen Fahrer die mindestens eine Warngrenze gegenüber einer voreingestellten Warngrenze verkürzt wird.

3. Verfahren nach einem der Ansprüche 1 oder 2, **dadurch gekennzeichnet, dass** der Ort mit Hilfe von Navigationssatelliten, eines im Fahrzeug vorhanden Navigationsgeräts, Bilderkennung durch am Fahrzeug montierte Kameras, Erkennen eines Positionssenders, durch Auswahl durch den Fahrer oder über eine Kombination mindestens zwei dieser Mittel bestimmt wird.

4. Computerprogramm, das eines der Verfahren nach einem der Ansprüche 1 bis 3 ausführt, wenn es auf einem Computer abläuft.

5. Fahrassistenzsystem zur Unterstützung eines Fahrers eines Fahrzeugs, umfassend Mittel zur Bestimmung eines Abstands zu einem Objekt in der Umgebung des Fahrzeugs, einen Speicher in dem mindestens eine Warngrenze abgelegt ist und ein Steuergerät, welches eingerichtet ist den Abstand des Fahrzeugs zu einem Objekt mit der mindestens einer Warngrenze zu vergleichen und bei Unterschreitung eine Aktion einzuleiten, wobei die im Speicher abgelegte mindestens eine Warngrenze in Abhängigkeit von Vorgaben des jeweiligen Fahrers und/oder vom Ort einstellbar ist, **dadurch gekennzeichnet, dass** das Fahrassistenzsystem eingerichtet ist, das Verfahren nach einem der Ansprüche 1 bis 3 auszuführen, wobei das Fahrassistenzsystem Mittel zur Erkennung des Fahrers umfasst und das Fahrassistenzsystem Sensoren zur Erfassung einer Fahrsituation umfasst, die zur fahrsituationsabhängigen Einstellung der mindestens einen Warngrenze eingerichtet sind.

6. Fahrassistenzsystem nach Anspruch 5, **dadurch gekennzeichnet, dass** das Fahrassistenzsystem eine Eingabevorrichtung umfasst, die zur Anpassung der mindestens einen Warngrenze, Auswahl des Fahrers und/oder Auswahl eines Ortes eingerichtet ist.

7. Fahrassistenzsystem nach Anspruch 5 oder 6, **dadurch gekennzeichnet, dass** das Fahrassistenzsystem Mittel zur Ortsbestimmung umfasst, die zur ortsabhängigen Einstellung der mindestens einen Warngrenze eingerichtet sind.

## Claims

1. Method for assisting a driver of a vehicle with a driving assistance system comprising the following steps:
(a) determining a distance between the vehicle and an object in the surroundings of the vehicle,
(b) comparing the distance with at least one warning limit,
(c) initiating an action in the event of the at least one warning limit being undershot,
wherein the at least one warning limit is set depending on stipulations of the respective driver and/or on the location at which the vehicle is situated, and wherein a driving situation determined by distance sensors of the vehicle, image recognition by cameras mounted on the vehicle, comparison of a vehicle position with a database, evaluation of a vehicle speed, selection by the driver or via a combination of at least two of these means is taken into account in the setting of the at least one warning limit, **characterized in that** the at least one warning limit is set individually for each driver of the vehicle, wherein the driver is determined by identification of an individualized key, evaluation of body dimensions and/or by an interrogation directed to the driver, and **in that** the at least one warning limit is dependent on boundaries of a corridor to be driven through.

2. Method according to Claim 1, **characterized in that** upon stipulation by the respective driver, the at least one warning limit is shortened relative to a preset warning limit.

3. Method according to either of Claims 1 and 2, **characterized in that** the location is ascertained with the aid of navigation satellites, a navigation unit present in the vehicle, image recognition by cameras mounted on the vehicle, identification of a position transmitter, by selection by the driver or via a combination of at least two of these means.

4. Computer program which performs one of the methods according to any of Claims 1 to 3 when it runs on a computer.

5. Driving assistance system for supporting a driver of a vehicle, comprising means for ascertaining a distance to an object in the surroundings of the vehicle, a storage device in which at least one warning limit is stored, and a control unit configured to compare the distance between the vehicle and an object with the at least one warning limit and to initiate an action upon undershooting, wherein the at least one warning limit stored in the storage device is adjustable depending on stipulations of the respective driver and/or on the location, **characterized in that** the driving assistance system is configured to perform the method according to any of Claims 1 to 3, wherein the driving assistance system comprises means for identifying the driver, and the driving assistance system comprises sensors for detecting a driving situation which are configured for setting the at least one warning limit in a manner dependent on the driving situation.

6. Driving assistance system according to Claim 5, **characterized in that** the driving assistance system comprises an input device configured for adapting the at least one warning limit, selecting the driver and/or selecting a location.

7. Driving assistance system according to Claim 5 or 6, **characterized in that** the driving assistance system comprises location ascertaining means configured for setting the at least one warning limit in a location-dependent manner.

## Revendications

1. Procédé pour assister un conducteur d'un véhicule au moyen d'un système d'assistance à la conduite, comprenant les étapes consistant à :
(a) déterminer une distance entre le véhicule et un objet dans l'environnement du véhicule,
(b) comparer la distance à au moins une limite d'avertissement,
(c) induire une action en cas de dépassement vers le bas de l'au moins une limite d'avertissement,
dans lequel l'au moins une limite d'avertissement est réglée en fonction de directives du conducteur concerné et/ou de l'endroit où se trouve le véhicule, et dans lequel, lors du réglage de l'au moins une limite d'avertissement, il est tenu compte d'une situation de conduite qui est déterminée au moyen de capteurs de distance du véhicule, d'une reconnaissance d'image effectuée par des caméras montées sur le véhicule, par comparaison d'une position du véhicule à une banque de données, par évaluation d'une vitesse du véhicule, par sélection par le conducteur ou par l'intermédiaire d'une combinaison d'au moins deux de ces moyens, **caractérisé en ce que** l'au moins une limite d'avertissement est réglée individuellement pour chaque conducteur du véhicule, dans lequel la détermination du conducteur est effectuée par reconnaissance d'une clé individualisée, par évaluation de dimensions corporelles et/ou par interrogation du conducteur et **en ce que** l'au moins une limite d'avertissement dépend de limites d'un couloir devant être parcouru.

2. Procédé selon la revendication 1, **caractérisé en ce qu'**au moins une limite d'avertissement est réduite conformément à une directive du conducteur respectif par rapport à une valeur d'avertissement préréglée.

3. Procédé selon l'une quelconque des revendications 1 ou 2, **caractérisé en ce que** l'endroit est déterminé au moyen de satellites de navigation, d'un appareil de navigation présent dans le véhicule, d'une reconnaissance d'image effectuée par des caméras montées sur le véhicule, d'une reconnaissance d'un émetteur de position, par sélection effectuée par le conducteur ou par l'intermédiaire d'une combinaison d'au moins deux de ces moyens:

4. Programme d'ordinateur mettant en oeuvre le procédé selon l'une quelconque des revendications 1 à 3 lorsqu'il est exécuté sur un ordinateur.

5. Système d'assistance à la conduite destiné à assister un conducteur d'un véhicule, comprenant des moyens permettant de déterminer une distance entre le véhicule et un objet dans l'environnement du véhicule, une mémoire dans laquelle est stockée au moins une limite d'avertissement, et un appareil de commande qui est conçu pour comparer la distance entre le véhicule et l'objet à l'au moins une limite d'avertissement et pour induire une action en cas de dépassement vers le bas, dans lequel l'au moins une limite d'avertissement stockée dans la mémoire peut être réglée en fonction de directives du conducteur respectif et/ou du lieu, **caractérisé en ce que** le système d'assistance à la conduite est conçu pour mettre en oeuvre le procédé selon l'une quelconque des revendications 1 à 3, dans lequel le système d'assistance à la conduite comprend des moyens destinés à reconnaître le conducteur et **en ce que** le système d'assistance à la conduite comprend des capteurs destinés à détecter une situation de conduite, lesquels moyens sont conçus pour régler l'au moins une limite d'avertissement en fonction de la situation de conduite.

6. Système d'assistance à la conduite selon la revendication 5, **caractérisé en ce que** le système d'assistance à la conduite comprend un dispositif de saisie qui est conçu pour ajuster l'au moins une limite d'avertissement, la sélection du conducteur et/ou la sélection du lieu.

7. Système d'assistance à la conduite selon la revendication 5 ou 6, **caractérisé en ce que** le système d'assistance à la conduite comprend des moyens destinés à déterminer le lieu, qui sont conçus pour régler l'au moins une limite d'avertissement en fonction du lieu.
